Europäisches Patentamt

European Patent Office

Office européen des brevets

(11) Publication number: **0 318 300**
A2

# (12) EUROPEAN PATENT APPLICATION

(21) Application number: 88311155.1

(22) Date of filing: 24.11.88

(51) Int. Cl.⁴: **B 26 B 27/00**

(30) Priority: 24.11.87 GB 8727517

(43) Date of publication of application:
31.05.89 Bulletin 89/22

(84) Designated Contracting States:
AT BE CH DE ES FR GB IT LI LU NL SE

(71) Applicant: Smallwood, Edward Donald
2 Manor Farm Cottages Rockbourne
Fordingbridge Hampshire SP6 3NP (GB)

(72) Inventor: Smallwood, Edward Donald
2 Manor Farm Cottages Rockbourne
Fordingbridge Hampshire SP6 3NP (GB)

(74) Representative: Gillam, Francis Cyril et al
SANDERSON & CO. European Patent Attorneys 34, East
Stockwell Street
Colchester Essex CO1 1ST (GB)

(54) **A pipe cutting device.**

(57) The pipe cutting device has a clamp having a pair of clamp members 11 and 12 for holding a pipe to be cut and a rotatable sleeve 19 supporting a pipe cutter 30 which has a cutting blade 35. The cutting blade 35 has a leading cutting edge 41 and a pair of flanks 42 and 43. The sleeve fits between the pair of clamp members 11 and 12. An automatic advance arrangement for the blade 35 includes a screw-threaded adjuster 39 and crossed bars 40 which engage a handle 13 to turn the adjuster 39, as the sleeve rotates. An operating tool having a ratchet connecting the tool to the sleeve 19 is used to turn the sleeve directionally.

FIG. 1

FIG. 3

**Description**

## A PIPE CUTTING DEVICE

This invention relates to a pipe cutting device comprising clamp means for holding a pipe to be cut and a rotatable pipe cutter having a cutting blade adapted to cut a held pipe on rotation of the cutter, particularly - but not exclusively - for use with plastics pipes. The device of this invention is especially suitable for use in cutting plastics pipes on location on a building site.

In the building industry, the process of cutting plastics pipes is most commonly carried out by using a hand-saw. This is a laborious process and frequently leads to unsatisfactory results such as an unevenly cut pipe, jagged edges or a pipe cut out of square, in any of which cases it is necessary to give the cut end of the pipe some further attention before the pipe may be used. Pipe cutting devices are known, particularly for metal pipes, but these do not perform satisfactorily on plastic pipes such as are used in the building industry, typically of up to 150 mm diameter. Moreover, these devices are not capable of providing a chamfered cut edge, as is required on a plastics pipe to be fitted in a pipe connector.

This invention seeks to provide a solution to the above problem by providing a manually operated cutting device suitable for use on plastics pipes to produce accurately and efficiently a cut end, for example on a building site.

Accordingly, this invention provides a pipe cutting device of the kind described characterised in that the pipe cutter is in the form of a sleeve able to surround a held pipe adjacent the clamp means and has the cutting blade mounted thereon to project into the bore of the sleeve, and in that the sleeve is provided with means to effect the rotation thereof around a held pipe which means comprises a reciprocable handle mounted for rotation about the axis of the sleeve and a ratchet arrangement interconnecting the handle and the sleeve whereby uni-directional rotation is imparted to the sleeve upon reciprocation of the handle.

The cutter sleeve is preferably formed in two similar parts each of semi-circular cross-sectional shape and which are hinged together along a pair of opposed edges, a clip preferably being provided to hold together the other pair of opposed edges after the fitting of the sleeve around a held pipe. The pipe cutter of this invention thus may be located on a long piece of pipe in a simple manner, without the need to slide the cutter to the required position from one end of the pipe.

The reciprocable handle advantageously at least partially surrounds the sleeve and may be guided to permit reciprocable movement thereof in the circumferential direction with respect to the sleeve, the handle preferably including a pawl which is engageable with a series of abutments on the sleeve whereby the sleeve rotates with the handle when the handle is moved in one sense, but the sleeve does not rotate when the handle is moved in the other sense. The pawl may be spring-loaded and the abutments may be defined by a perforated band fitted around said sleeve. In this way, the sleeve may be driven in a simple manner around the pipe in the required sense to perform a cut, merely by reciprocating the handle.

The cutting blade is preferably mounted on the sleeve by means of an adjustable carrier which permits the projection of the blade into the bore of the sleeve to be varied, said carrier preferably having a screw-threaded adjustment member which acts on the blade. Means may also be provided automatically to rotate the adjustment member upon rotation of the sleeve, which means preferably turns the adjustment member intermittently once for each full turn of the sleeve. In this way, the cutting blade will be advanced to continue the cutting action as the sleeve is rotated about the pipe, until the pipe has been severed.

The automatic advance of the blade may be achieved by providing the adjustment member with at least one lever, but preferably a crossed-bar arrangement, extending generally radially from the adjustment member, whereby the lever may be driven by engagement with a part of the clamp means or handle as the sleeve is rotated past said part.

As mentioned above, the pipe cutter of this invention is especially useful for use with plastics pipes. For this purpose, the cutting blade should be configured to produce the required profile on at least one, but preferably both, of the cut ends of a pipe being severed. The blade thus may have a leading cutting edge which projects furthest into the bore of the sleeve and which is adapted to sever a held pipe upon rotation of the sleeve; the blade further may have a pair of cutting flanks adapted to form the required chamfers on the cut ends of a held pipe as the cutting proceeds. The cutting blade may be configured to produce whatever profile is required on a cut pipe end.

The clamp device should be easy to secure to a pipe at the required position where a cut is to be made, and yet must be able to hold the pipe firmly and guide the cutter as the latter is rotated. To this end, the clamp device may have a pair of clamp members disposed to hold a pipe at axially spaced locations on the pipe, and the sleeve having an overall length which fits between the clamp members, so as to be guided thereby.

In order to allow the cutting device of this invention to be used with pipes of various sizes, spacers may be provided for mounting within the clamp members and within the sleeve, which spacers have a suitable radial thickness having regard to the pipe to be cut. If the spacers are to be used, then the cutting blade must project into the sleeve to a greater extent, and to achieve this, it may be necessary to utilise an alternative blade carrier, or a longer blade.

By way of example only, one specific embodiment of a pipe cutting device according to the invention will now be described in detail, reference being made to the somewhat diagrammatic accompanying drawings, in which:-

Figure 1 is an end view of a clamp arrangement of the embodiment of the pipe cutting device according to this invention;

Figure 2 is a plan view of the clamp arrangement of Figure 1;

Figure 3 is a perspective view of a sleeve used to support a cutter in the pipe cutting device of this invention;

Figure 4 is a plan view of the sleeve of Figure 3;

Figure 5 is a view of a cutter used in the embodiment of pipe cutting device;

Figure 6 is a detail view of a blade mounted in the cutter of Figure 5; and

Figure 7 shows an operating tool of the embodiment of pipe cutting device.

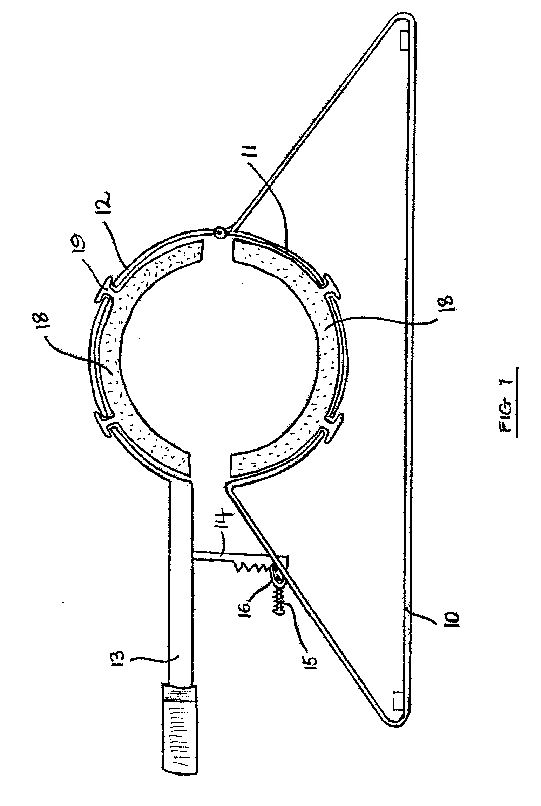

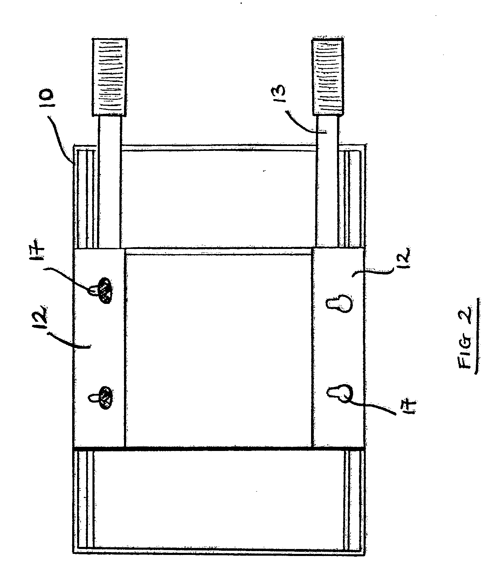

The cutting device shown in the drawings is intended for the cutting of plastics pipe. This device has a clamp arrangement (Figures 1 and 2) for holding a pipe to be cut, which clamp arrangement comprises a base frame 10 having a pair of spaced arcuate support surfaces 11 and a corresponding pair of arcuate clamp members 12, all of which surfaces and members are faced with a friction material. Each arcuate clamp member 12 is hinged at one end to its associated arcuate support surface 11, and supports a handle 13 at its opposed end, which handle 13 extends generally outwardly. Each handle 13 incorporates a respective ratchet 14 connected to the underside thereof and engageable with catch 15 mounted in ring 16 attached to the base frame 10. The catch 15 is spring-loaded to permit the release of the ratchet 14 once engaged therewith. This ratchet arrangement allows each arcuate clamp member 12 to clamp a pipe securely to its arcuate support surface 11.

Each arcuate support surface 11 and arcuate clamp member 12 includes a pair of key-hole openings 17, by means of which inserts 18 having headed pegs 19 may be mounted on those surfaces and members. The inserts 18 are made of friction material and shaped to fit closely against the associated parts, and allow the accommodation of pipes of smaller diameters than that defined by the surfaces 11 and members 12.

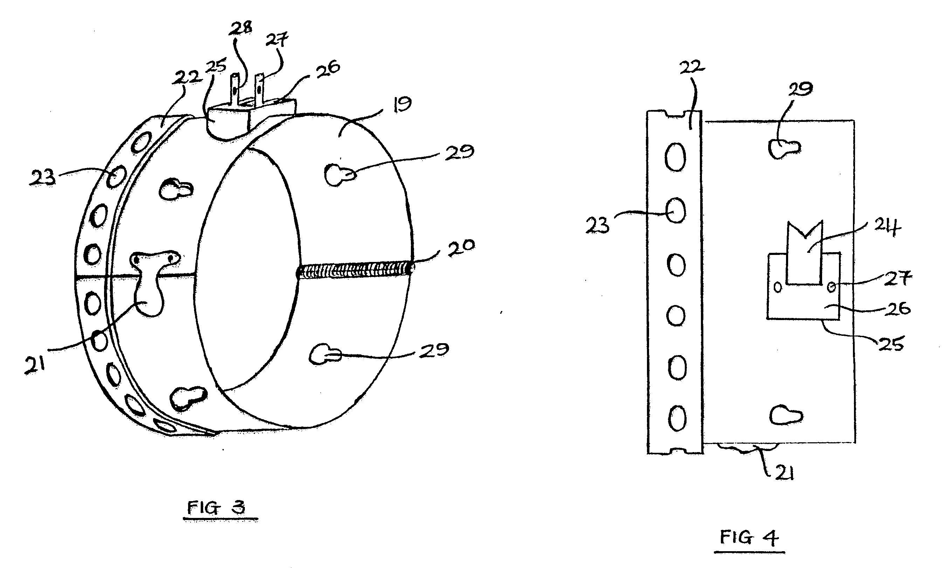

The device is also provided with a sleeve 19 as illustrated in Figures 3 and 4, which comprises two semi-cylindrical shells suitably sized closely to fit between the members 12, which shells are joined together along one of their edges by a hinge 20 and releasably secured along their other edges by a clip 21. A band 22 is affixed to the periphery of both semi-cylindrical shells, which band incorporates a series of perforations 23. The sleeve 19 has a swarf discharge opening 24 shaped at one end to allow alignment of the cutter (to be described below) with a mark on a held pipe. Adjacent the opening 24 is a support 25 providing a planar surface 26 for the cutter, a pair of rods 27 projecting from that surface 26 and each having a crossbore 28. Each shell has a pair of key-hole openings 29, for use with inserts corresponding to those described above. However, in the case of the insert for the shell having the swarf-discharge opening 24, that insert must have a corresponding opening.

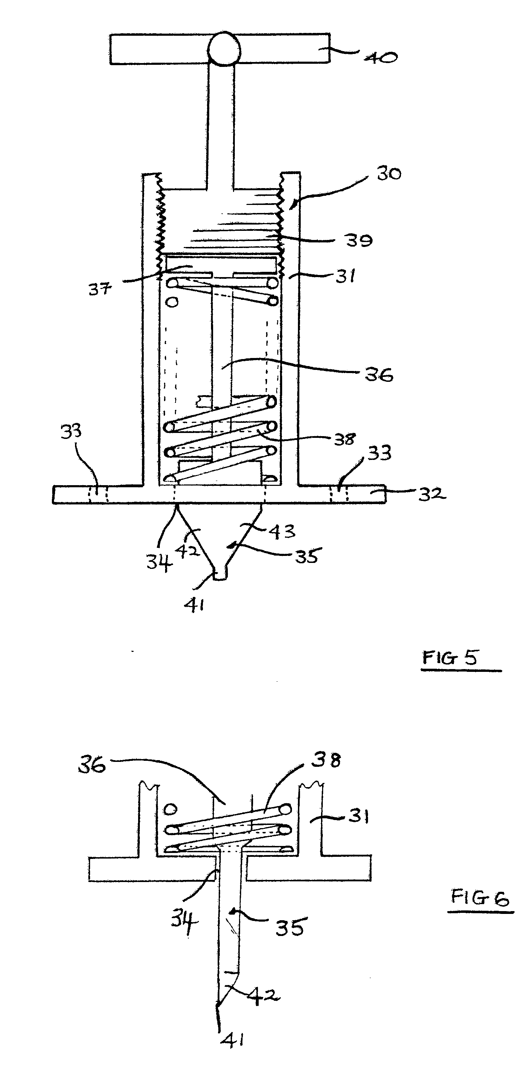

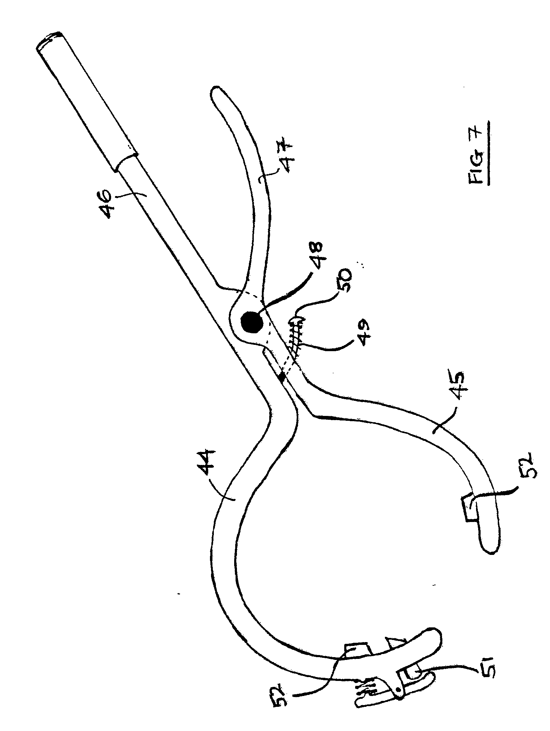

The cutter 30 (Figures 5 and 6) comprises a tubular body 31, open at one end and attached to a plate 32 at its other end, the plate 32 having a pair of holes 33 in which may be received the rods 27 when the cutter is mounted on surface 26 on the sleeve 19. The body 31 may be secured thereon by a U-shaped pin (not shown) inserted into the bores 28.

The plate 32 is provided with a slot 34 in which is slidably mounted a pipe cutting blade 35 formed at the lower end of a shaft 36, the other end of the shaft having a flange 37. The slot 34 prevents the rotation of the blade 35 about the axis of the shaft 36.

A compression spring 38 extends between the plate 32 and the flange 37, to urge the blade 35 further into the body 31. This is counteracted in use by an adjuster which comprises a screw-threaded plug 39 having a pair of crossed bars 40 mounted on a rod projecting from the plug. The plug 39 is threadingly engaged with the body 31 to permit adjustment of the projection of the blade 35 beyond the plate 32. The shape of the blade 35 determines the final profile of the cut ends of a pipe, when severed. Thus, the blade 35 has a leading cutting edge 41 which serves to sever a held pipe, and a pair of flanks 42 and 43 which serve to chamfer the cut ends of the severed pipe.

Referring now to Figure 7, there is illustrated an operating tool for the sleeve 19, which comprises a pair of arcuate jaws 44 and 45, each having at one end a respective handle 46 and 47, pivoted together by pin 48. The two jaws 44 and 45 are urged together by a spring 49 acting between handle 47 and the head 50 of a radius pin mounted on handle 46 and passing through a slot in handle 47. Squeezing the two handles 46 and 47 together against the action of spring 49 opens the jaws and allows them to be located over the band 22 of the sleeve 19. Jaw 44 has a greater arcuate extent than the other jaw 45 and has a spring loaded pawl 51 adjacent the free end of the jaw, which pawl 51 projects radially inwardly through said jaw 44. The pawl 51 has an inclined inner end face, and may engage with the perforations in the band 22 when the tool has been located thereon. Fitted to the side edges of both jaws are pairs of guides 52 which serve to hold the jaws 44 and 45 of the tool in position on the band 22.

The pipe cutting device described above is used by loosely clamping a pipe in the clamp arrangement, using if necessary the insets 18, depending on the diameter of the pipe to be cut. The cutter 30 is then mounted on support 25 of sleeve 19 with rods 27 passing through the holes 33, the cutter being secured by a U-shaped pin passed through the cross-bores 28. Next the sleeve 19 is located around the pipe and the pointed end of the swarf-discharge opening 24 is aligned with a cutting mark drawn on the pipe; the clamp is then tightened on the pipe by pressing harder on the handles 13. The operating tool illustrated in Figure 7 is then engaged with the band 22 on the sleeve 19.

The plug 39 is turned until the leading cutting edge 41 lightly contacts the pipe to be cut. The pawl 51 on jaw 44 engages the perforations of the band 22 and acts to impart uni-directional rotation to the sleeve as the tool is given a reciprocating motion about the axis of a held pipe. When moved in one sense, the pawl 51 engages a perforation in the band 22 and so the sleeve 19 rotates, but when moved in the opposite sense, the inclined face at the inner end of the pawl 51 allows the pawl 51 to ride over the perforations, and the sleeve 19 remains stationary. Each time the sleeve 19 completes a full turn about the pipe, the end of one of the crossed-bars 28 engages the adjacent handle 13 and so turns the plug 39 to thread that plug deeper into engagement with the body 31; this forces the blade against the action of spring 38 to project to a greater extent into the sleeve, and to continue the cutting action on a held pipe. This action is continued until the cutting edge 41 severs the pipe and the cut ends have been chamfered to the required extent by the pair of flanks 42 and 43.

Once the pipe has been cut into two parts, these are released from the clamp arrangement by retracting the catch 15, mounted on ring 16, which releases the ratchets 14 allowing the removal of the pipe parts. Having released the pipe parts, the sleeve 19 with the operating tool will simply disengage from the cut ends of the pipe parts.

## Claims

1. A pipe cutting device comprising clamp means for holding a pipe to be cut and a rotatable pipe cutter 30 having a cutting blade 35 adapted to cut a held pipe on rotation of the cutter, characterised in that the pipe cutter 30 is in the form of a sleeve 19 able to surround a held pipe adjacent the clamp means and has the cutting blade 35 mounted thereon to project into the bore of the sleeve 19, and in that the sleeve is provided with means to effect the rotation thereof around a held pipe which means comprises a reciprocable handle mounted for rotation about the axis of the sleeve and a ratchet arrangement interconnecting the handle and the sleeve 19 whereby uni-directional rotation is imparted to the sleeve upon reciprocation of the handle.

2. A pipe cutting device according to claim 1, further characterised in that the cutter sleeve 19 is formed in two similar parts each of semi-circular cross-sectional shape and hinged 20 together along a pair of opposed edges, a clip 21 being provided to hold together the other pair of opposed edges after the fitting of the sleeve around a held pipe.

3. A pipe cutting device according to claim 1 or claim 2, characterised in that the reciprocable handle at least partially surrounds the sleeve 19 and is guided to permit reciprocable movement thereof in the circumferential direction with respect to the sleeve, the handle preferably including a pawl 51 which is engageable with a series of abutments 23 on the sleeve 19 whereby the sleeve 19 rotates with the handle when the handle is moved in one sense, but the sleeve does not rotate when the handle is moved in the other sense.

4. A pipe cutting device according to any of the preceding claims, characterised in that the cutting blade 35 is mounted on the sleeve 19 by means of an adjustable carrier 34 which permits the projection of the blade into the bore of the sleeve to be varied, said carrier preferably having a screw-threaded adjustment member 39 which acts on the blade.

5. A pipe cutting device according to claim 4, further characterised in that means are provided automatically to rotate the adjustment member 39 upon rotation of the sleeve 19, which means preferably turns the adjustment member intermittently once for each full turn of the sleeve.

6. A pipe cutting device according to claim 5, characterised in that the adjustment member has at least one lever 40 extending generally radially from the adjustment member, which lever 40 is driven by engagement with a part of the clamp means or handle 13 as the sleeve is rotated past said part.

7. A pipe cutting device according to any of the preceding claims, characterised in that the cutting blade 35 has a leading cutting edge 41 adapted to sever a held pipe upon rotation of the sleeve, and a pair of cutting flanks 42 and 43 adapted to form chamfers on the cut ends of a held pipe as the cutting proceeds.

8. A pipe cutting device according to any of the preceding claims, characterised in that the clamp device has a pair of clamp members 12 disposed to hold a pipe at axially spaced locations on the pipe, and the sleeve has an overall length adapted to fit between the clamp members so as to be guided by the clamp means.

9. A pipe cutting device according to any of the preceding claims, wherein spacers 18 are provided for mounting within the clamp means and within the sleeve 19 of the cutter 30 to adapt the clamp means and the cutter for use with pipes of different sizes.

FIG 1

FIG 2

EP 0 318 300 A2

FIG 3

FIG 4

EP 0 318 300 A2

40

30

39

31

37

36

33

38

33

32

34 42 43 35

41

FIG 5

36

38

31

34

35

42

41

FIG 6

FIG 7

EP 0 318 300 A2